# EUROPEAN PATENT SPECIFICATION

(11) **EP 0 909 477 B1**
(45) Date of publication and mention of the grant of the patent: **02.01.2002**
(21) Application number: 97930973.9
(22) Date of filing: 02.07.1997
(51) Int. Cl.: H02K 29/03, D06F 37/30

(54) **ELECTRONICALLY COMMUTATED MOTOR FOR DIRECT DRIVE OF WASHING MACHINE DRUM**
ELEKTRONISCH KOMMUTIERTER DIREKTANTRIEB FÜR WASCHMASCHIENENTROMMELN
MOTEUR A COMMUTATION ELECTRONIQUE POUR L'ENTRAINEMENT DIRECT D'UN TAMBOUR DE MACHINE A LAVER

(30) Priority: 02.07.1996 SI 9600209; 09.06.1997 SI 9700153
(43) Date of publication of application: 21.04.1999
(73) Proprietor: Domel Elektromotorji in Gospodinjski Aparati, D.O.O., 4228 Zelenzniki (SI)
(72) Inventor: DOLENC, Sandi, 4228 Z elezniki (SI); JELENC, Janko, 4228 Z elezniki (SI)
(74) Representative: Patent- und Rechtsanwaltssozietät, Maucher, Börjes & Kollegen
(86) International application number: SI9700021
(87) International publication number: WO9800902

(56) References cited:
- EP-A- 0 421 346
- DE-A- 3 941 709
- US-A- 3 860 843
- US-A- 4 626 727
- US-A- 4 712 035
- US-A- 5 030 864
- US-A- 5 489 811
- PATENT ABSTRACTS OF JAPAN vol. 014, no. 200 (E-0920), 24 April 1990 & JP 02 041641 A (HITACHI LTD), 9 February 1990,

## Description

The invention concerns an electronically commutated motor for direct drive of a washing machine drum, wherein a stator is fixed to the cross-shaped support of the washing machine and a rotor is fixed directly to the axle of the washing machine drum, wherein the number of rotor poles represented by magnetic segments is greater than the number of stator poles with coils, wherin the stator poles/rotor poles ratio factor is 1.3333.

The technical problem, which has been successfully solved by the present invention, is how to build a driving motor for a washing machine drum that will provide direct drum driving at low noise levels and a relatively high torque at the motor shaft.

Washing machines widely use asynchronous or universal collector motors for driving the drum, which are installed under the drum. Power transfer from the motor to the drum is carried out by way of two pulleys and a belt with the usual gear ratio of 1:12. The described arrangement has several drawbacks: high counterweight mass due to motor position outside the drum centre; high level of noise, particularly during the centrifuging stage; relatively short life expectancy of the belt; motor characteristic is unadapted to the load characteristic; and low yield of the drive.

All the above-mentioned drawbacks are eliminated through the design of a washing machine with direct drive of the drum. The stator of such motor is fixed to the cross-shaped support of the drum, whereas the rotor is mounted directly onto the driving axle of the washing drum. Thus the motor itself thus has no bearing of its own, as it uses the existing drum bearing instead. In such a structure of the drive, the prior art two driving pulleys and the belt are no longer necessary, which means a considerable reduction of counterweight. In addition to the above-mentioned advantages, a direct drive also eliminates the previously enumerated drawbacks of the conventional drive of washing machine drums.

Motor versions have been known for direct drive of washing machines, which are usually equipped with a number of stator poles greater than that of rotor poles, resulting in strong pulsations of the shaft moment, and consequently, in a high noise level. The air gap between the rotor and the stator is usually even, this providing an inter-phase induced voltage of trapezoidal form, which - at the usual current form - again leads to a relatively high noise level. An optimal stator pole/intermediary space width ratio should be chosen in order to obtain a low noise level and a relatively high torque at the machine shaft. In prior art direct drives this ratio is not optimal. With the conventional method of producing laminations, where the external and internal motor diameters are relatively large, there is a large quantity of scrap, which results in higher production casts of the motor. The prior art drives also use the conventional way of front and groove insulation, which is a time- and money-consuming process.

US,A,3030864 discloses an electronically commutated motor suitable for use as a direct drive of a washing machine having a number of rotor poles represented by magnetic segments which is greater than the number of stator poles with coils. The stator poles/rotor poles ratio factor is 1.3333.

US,A,5030864 discloses a similar motor having the same features as hereabove. The stator pole/intermediate space width ratio of that motor is 1.7272. Although the motor produces a highly constant speed of rotation, the noise level is not optimal.

The purpose of invention is to produce an an electronically commutated motor of the type defined in the opening paragraph which makes it possible - through an optimal stator pole/intermediate space width ratio and with an uneven air gap between the stator and the rotor - to obtain a low noise level and a relatively high torque at the motor shaft.

To this end the invention is characterized in that the stator pole intermediary space width ratio between the stator poles is 1.868.

An electranically commutated motor for direct drive of a washing machine drum in accordance with the invention will now be described by way of example and with reference to the accompanying drawings in which:
- Figure 1: is a cross-sectional view illustrating a rotor and stator part;

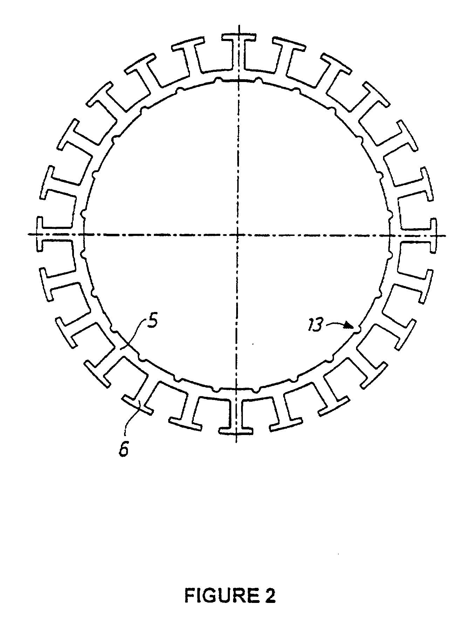

- **Figure 2**: illustrates a stator assembly segment of a motor in accordance with the invention;

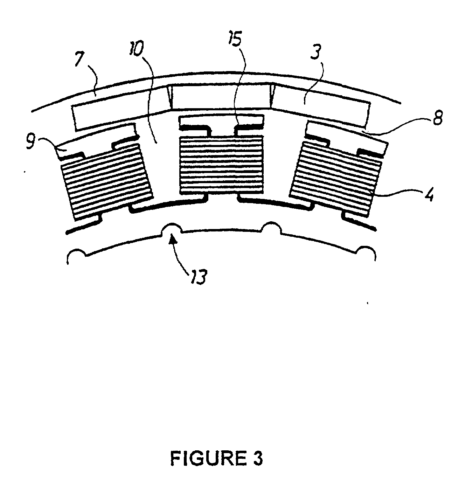

- **Figure 3**: illustrates a stator and motor part of a motor in accordance with the invention showing uneven air gaps;
- **Figure 4**: illustrates the production of a stator lamination;

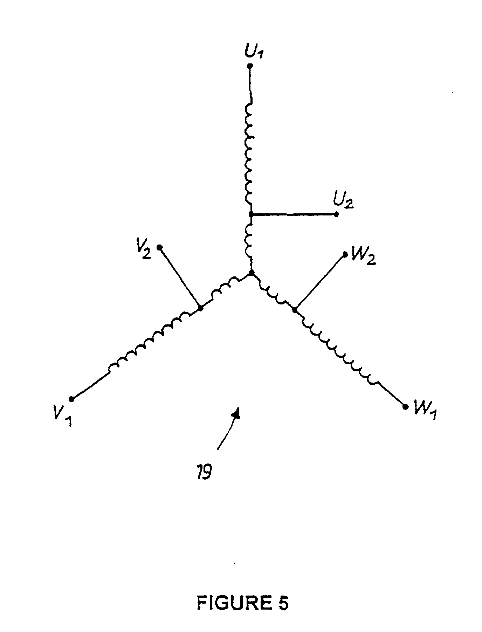

- **Figure 5**: is a schematic presentation of different electrical connections of a motor for the different working operations of a washing machine;

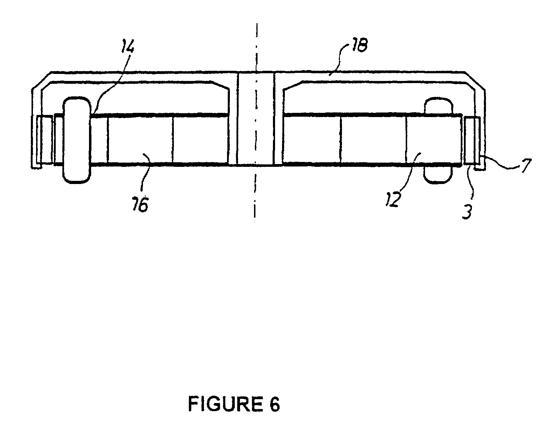

- **Figure 6**: is a longitudinal cross-sectional view illustrating a motor in accordance with the invention;
- **Figure 7**: illustrates the magnetization of magnetic segments;
- **Figure 8**: illustrates stator poles.

An electronically commutated motor for direct drive of a washing machine drum in accordance with the invention comprises a stator 1 consisting of a stator assembly made of dynamo sheet including a stator frame 5 with stator poles 6 expressed along its periphery. Coils 4 are installed on said expressed stator poles 6, which represent a concentric three-phase stator winding. A rotor 2 of the motor is carried out as a soft-magnetic iron core 7 onto which magnetic segments 3 are bonded.

The stator 1 of an electronically commutated motor in accordance with the invention is fixed to the cross-shaped support of the washing machine. The number of rotor poles represented by said magnetic segments 3 is greater than the number of the expressed stator poles 6, the rotor poles/stator poles ratio factor equalling 1.3333.

An uneven air gap between the rotor and stator poles can be achieved in two ways. In the first case, the magnetic segments 3 of rectangular form are bonded to the rotor core 7, with the upper surface of the stator poles 9 in the stator assembly 12 having a slightly convex shape, thus producing an uneven air gap 8. In the second case, the magnetic segments 3 can be shaped according to the radius, with the stator poles 9 being straight. Through an uneven air gap thus formed between the stator and the rotor, a sinusoidal form of the inter-phase induced voltage is obtained which strongly reduces the noise level during motor operation. The stator pole 9/intermediate space 10 width ratio between the individual stator poles 9 equals 1.868. Such a ratio represents an optimal choice, since minimal turning moment pulsation is achieved through it along with a minimal noise level.

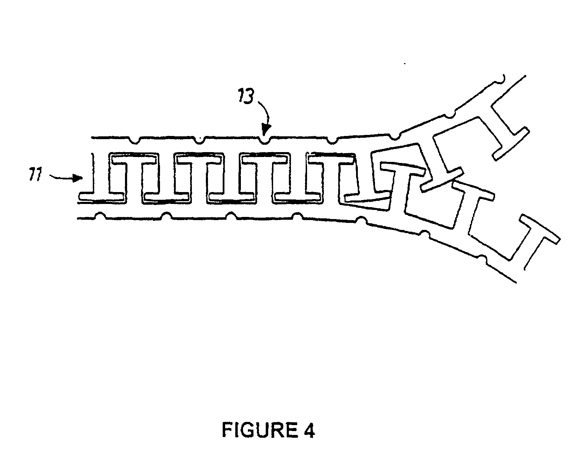

A schematic presentation of electrical connections of the motor for the different washing machine operations is shown in Figure 4. The three-phase motor winding 19 is star connected, with each phase having two taps: one for washing and one for the centrifuge. During the washing cycle, when lower rotational speed is needed, the motor is connected between terminals U1, V1 and W1. In this case the entire winding is active. During centrifuging, when high rotational speed is needed, the motor is connected between terminals U2, V2 and W2. In this position only a part of the winding is active. The centrifuging/washing ratio of the active winding can be 1:3, 1:4 or 1:5. Said winding 19 with taps makes it possible for the motor to operate under optimal conditions through all washing cycles.

Figure 4 illustrates a part of production of a stator assembly. Individual stator laminations are cut out of a strip 11 and then formed by bending the cut-out strip to a pre-determined diameter. Two stator assemblies can be simultaneously cut out of the strip 11. The cut-out strips for the first stator assembly are bent in one direction, and those for the second assembly are bent in the other direction. Simultaneously with the stator laminations also auxiliary grooves 13 are cut out of the strip, which will facilitate subsequent bending of the cut-out strip to the pre-determined diameter.

The stator assembly itself is lined with plastic material which forms front insulation 14, groove insulation 15 and a hub 16 for the fixation of the stator to the cross-shaped support of the drum.

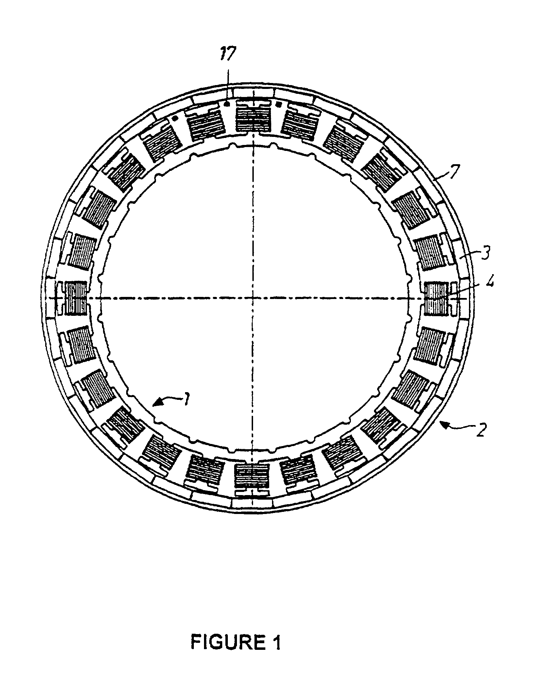

On the plastic lining of the stator assembly, places are provided for the fixation of circuits 17 of Hall generators - three in number - which lie in the centre of adjacent grooves, at an angular distance of 15° with regard to each other. The position of the circuits 17 is shown in Figure 1.

The magnetic segments 3 together with the iron core are also lined with plastic material 18 which, in addition to fixing the magnetic segments 3 to the iron core 7, also forms a hub for the fixation of the rotor 2 to the shaft of the washing machine drum.

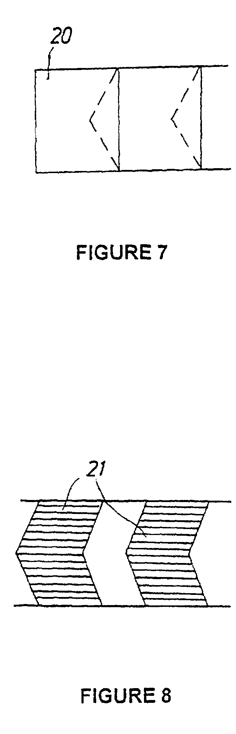

Additional reduction of moment pulsations and thereby the reduction of noise are achieved through magnetization of magnetic segments 20 into a delta form, as shown in Figure 7, or by shaping stator poles 21 into a double trapezoidal form, as shown in Figure 8.

An electronically commutated motor for direct drive of a washing machine drum in accordance with the invention has successfully solved the set technical problem of direct drive of a washing machine drum with minimum moment pulsation and hence, with a low noise level and a relatively high moment at the motor shaft. In addition, the described structural solution of a motor also provides the possibility of easy, large-series production.

## Claims

1. An electronically commutated motor for direct drive of a washing machine drum, wherein a stator (1) is fixed to the cross-shaped support of the washing machine and a rotor (2) is fixed directly to the axle of the washing machine drum, wherein the number of rotor poles represented by magnetic segments (3) is greater than the number of stator poles (6) with coils (4), wherin the stator poles/rotor poles ratio factor is 1.3333,
**characterised in that**
the stator pole (6) intermediary space (10) width ratio between the stator poles (6) is 1.868.

2. An electronically commutated motor for direct drive of a washing machine drum as claimed in Claim 1,
**characterised in that**
said magnetic segments (3) bonded to the rotor core (7) have a rectangular form, with the upper surface of stator poles (9) in a stator assembly (12) being slightly convex, thus forming an uneven air gap (8).

3. An electronically commutated motor for direct drive of a washing machine drum as claimed in Claim 1,
**characterised in that**
said magnetic segments (3) are shaped according to the radius, while said stator poles (9) are straight.

4. An electronically commutated motor for direct drive of a washing machine drum as claimed in Claims 1 to 3,
**characterised in that**
a three-phase winding (19) is star connected, with each phase having two taps, whereby in the first regime, the motor is connected between the terminals U1, V1 and W1 with the entire winding being active, and in the second regime, the motor is connected between the terminals U2, V2 and W2, with a part of the winding being active, the ratio of the active windings between the first and the second regime being 1:3, 1:4 or 1:5.

5. An electronically commutated motor for direct drive of a washing machine drum as claimed in Claims 1 to 4,
**characterised in that**
a stator assembly (12) is made by cutting stator laminations out of a strip (11), whereupon the stator assembly (12) is formed by bending the cut-out strip (11) to a pre-determined diameter.

6. An electronically commutated motor for direct drive of a washing machine drum as claimed in Claim 5,
**characterised in that**
two stator assemblies (12) are simultaneously cut out of a strip (11) and formed by bending the cut-out strip (11) in one direction for the first assembly, and into another for the second assembly.

7. An electronically commutated motor for direct drive of a washing machine drum as claimed in Claims 5 and 6,
**characterised in that**
simultaneously with said stator laminations auxiliary grooves (13) are cut out of said strip (11).

8. An electronically commutated motor for direct drive of a washing machine drum as claimed in Claims 1 to 7,
**characterised in that**
said stator assembly (12) is lined with plastic material, this forming front insulation (14), groove insulation (15) and a hub (16) for the fixation of the stator (1) to the cross-shaped support of the drum.

9. An electronically commutated motor for direct drive of a washing machine drum as claimed in Claims 1 to 8,
**characterised in that** in the plastic lining of the stator assembly fixation places are provided for three circuits (17) of Hall generators lying in the centre between the adjacent grooves (10) at an angular distance of 15° with regard to each other.

10. An electronically commutated motor for direct drive of a washing machine drum as claimed in Claims 1 to 9,
**characterised in that**
said magnetic segments (3) together with the iron core (7) are lined with plastic material (18), which at the same time forms a hub for the fixation of the rotor (2) to the shaft of the washing machine drum.

11. An electronically commutated motor for direct drive of a washing machine drum as claimed in Claims 1 to 10,
**characterised in that**
magnetic segments (20) are magnetized to form a delta, whereas the stator poles are straight.

12. An electronically commutated motor for direct drive of a washing machine drum as claimed in Claims 1 to 10,
**characterised in that**
stator poles (21) are formed into a double trapezoidal form, whereas the magnetic segments are magnetized in a straight line.

## Patentansprüche

1. Elektronisch kommutierter Motor für den Direktantrieb einer Waschmaschinentrommel, wobei ein Stator (1) am kreuzförmigen Träger der Waschmaschine befestigt ist und ein Rotor (2) direkt an der Achse der Waschmaschinentrommel befestigt ist, wobei die Anzahl von Rotorpolen, dargestellt durch Magnetsegmente (3), größer ist als die Anzahl von Statorpolen (6) mit Spulen (4), wobei der Faktor des Verhältnisses Statorpole/Rotorpole 1,3333 ist, **dadurch gekennzeichnet, daß** das Statorpol (6)-Zwischenraum (10)-Breitenverhältnis zwischen den Statorpolen (6) 1,868 ist.

2. Elektronisch kommutierter Motor für den Direktantrieb einer Waschmaschinentrommel nach Anspruch 1, **dadurch gekennzeichnet, daß** die Magnetsegmente (3), die mit dem Rotorkern (7) verbunden sind, eine rechteckige Form aufweisen, die Oberseite von Statorpolen (9) in einer Statoranordnung (12) leicht konvex ist und deshalb einen ungleichmäßigen Luftspalt (8) bildet.

3. Elektronisch kommutierter Motor für den Direktantrieb einer Waschmaschinentrommel nach Anspruch 1, **dadurch gekennzeichnet, daß** die Magnetsegmente (3) gemäß dem Radius geformt sind, während die Statorpole (9) gerade sind.

4. Elektronisch kommutierter Motor für den Direktantrieb einer Waschmaschinentrommel nach Anspruch 1 bis 3, **dadurch gekennzeichnet, daß** eine Dreiphasenwicklung (19) sterngeschaltet ist, jede Phase zwei Abgriffe aufweist, wobei im ersten Gang der Motor zwischen die Anschlußklemmen U1, V1 und W1 geschaltet und die gesamte Wicklung aktiv ist, und im zweiten Gang der Motor zwischen die Anschlußklemmen U2, V2 und W2 geschaltet und ein Teil der Wicklung aktiv ist, und das Verhältnis der aktiven Wicklungen zwischen dem ersten und zweiten Gang 1:3, 1:4 oder 1:5 ist.

5. Elektronisch kommutierter Motor für den Direktantrieb einer Waschmaschinentrommel nach Anspruch 1 bis 4, **dadurch gekennzeichnet, daß** eine Statoranordnung (12) durch Ausschneiden von Statorblechen aus einem Streifen (11) hergestellt wird, woraufhin die Statoranordnung (12) durch Biegen des ausgeschnittenen Streifens (11) zu einem vorbestimmten Durchmesser ausgebildet wird.

6. Elektronisch kommutierter Motor für den Direktantrieb einer Waschmaschinentrommel nach Anspruch 5, **dadurch gekennzeichnet, daß** zwei Statoranordnungen (12) gleichzeitig aus einem Streifen (11) ausgeschnitten und durch Biegen des ausgeschnittenen Streifens (11) in eine Richtung für die erste Anordnung und in eine andere für die zweite Anordnung ausgebildet werden.

7. Elektronisch kommutierter Motor für den Direktantrieb einer Waschmaschinentrommel nach Anspruch 5 und 6, **dadurch gekennzeichnet, daß** gleichzeitig mit den Statorblechen Hilfskerben (13) aus dem Streifen (11) ausgeschnitten werden.

8. Elektronisch kommutierter Motor für den Direktantrieb einer Waschmaschinentrommel nach Anspruch 1 bis 7, **dadurch gekennzeichnet, daß** die Statoranordnung (12) mit Kunststoffmaterial ausgekleidet ist, wobei dies Frontisolierung (14), Kerbenisolierung (15) und eine Nabe (16) zum Befestigen des Stators (1) an dem kreuzförmigen Träger der Trommel bildet.

9. Elektronisch kommutierter Motor für den Direktantrieb einer Waschmaschinentrommel nach Anspruch 1 bis 8, **dadurch gekennzeichnet, daß** in der Kunststoffauskleidung der Statoranordnung Befestigungsstellen vorgesehen sind für drei Stromkreise (17) von Hall-Generatoren, die in der Mitte zwischen den benachbarten Kerben (10) in einem Winkelabstand von 15° in bezug aufeinander liegen.

10. Elektronisch kommutierter Motor für den Direktantrieb einer Waschmaschinentrommel nach Anspruch 1 bis 9, **dadurch gekennzeichnet, daß** die Magnetsegmente (3) zusammen mit dem Eisenkern (7) mit Kunststoffmaterial (18) ausgekleidet sind, welches gleichzeitig eine Nabe bildet zum Befestigen des Rotors (2) an der Welle der Waschmaschinentrommel.

11. Elektronisch kommutierter Motor für den Direktantrieb einer Waschmaschinentrommel nach Anspruch 1 bis 10, **dadurch gekennzeichnet, daß** Magnetsegmente (20) magnetisiert werden, um ein Dreieck zu bilden, während die Statorpole gerade sind.

12. Elektronisch kommutierter Motor für den Direktantrieb einer Waschmaschinentrommel nach Anspruch 1 bis 10, **dadurch gekennzeichnet, daß** Statorpole (21) in Form eines Doppeltrapezes ausgebildet sind, während die Magnetsegmente in einer geraden Linie magnetisiert werden.

## Revendications

1. Moteur commuté électroniquement pour entraîner directement un tambour de machine à laver, dans lequel un stator (1) est fixé au support en forme de croix de la machine à laver et un rotor (2) est fixé directement à l'axe du tambour de machine à laver, dans lequel le nombre de pôles du rotor représentés par des segments magnétiques (3) est supérieur au nombre de pôles du stator (6) avec des bobines (4), dans lequel le coefficient du rapport (nombre de pôles du stator)/(nombre de pôles du rotor) est de 1,3333, **caractérisé en ce que** le rapport des larqeurs de l'espace intermédiaire (10) des pôles du stator (6) entre les pôles du stator (6) est de 1,868.

2. Moteur commuté électroniquement pour entraîner directement un tambour de machine à laver selon la revendication 1, **caractérisé en ce que** les dits segments magnétiques (3) fixés au noyau du rotor (7) ont une forme rectangulaire, la surface supérieure des pôles du stator (9) dans un assemblage de stators (12) étant légèrement convexe, formant ainsi un entrefer d'air irrégulier (8).

3. Moteur commuté électroniquement pour entraîner directement un tambour de machine à laver selon la revendication 1, **caractérisé en ce que** lesdits segments magnétiques (3) sont façonnés selon le rayon, tandis que lesdits pôles du stator (9) sont droits.

4. Moteur commuté électroniquement pour entraîner directement un tambour de machine à laver selon les revendications 1 à 3, **caractérisé en ce qu'**un bobinage triphasé (19) est branché en étoile, chaque phase ayant deux prises, par le biais desquelles dans le premier régime, le moteur est branché entre les bornes U1, V1 et W1, le bobinage entier étant actif, et dans le deuxième régime, le moteur est branché entre les bornes U2, V2 et W2, une portion du bobinage étant active, le rapport des bobinages actifs entre le premier et le deuxième régime étant de 1:3, 1:4 ou 1:5.

5. Moteur commuté électroniquement pour entraîner directement un tambour de machine à laver selon les revendications 1 à 4, **caractérisé en ce qu'**un assemblage de stators (12) est fabriqué en découpant des lamelles de stator à partir d'une bande (11) après quoi l'assemblage du stator (12) est formé en pliant la bande découpée (11) jusqu'à l'obtention d'un diamètre prédéterminé.

6. Moteur commuté électroniquement pour entraîner directement un tambour de machine à laver selon la revendication 5, **caractérisé en ce que** deux assemblages de stators (12) sont découpés simultanément à partir d'une bande (11) et formés en pliant la bande découpée (11) dans un sens pour le premier assemblage et dans l'autre sens pour le deuxième assemblage.

7. Moteur commuté électroniquement pour entraîner directement un tambour de machine à laver selon les revendications 5 et 6, **caractérisé en ce que** des rainures auxiliaires (13) sont découpées simultanément avec lesdites lamelles de stator à partir de ladite bande (11).

8. Moteur commuté électroniquement pour entraîner directement un tambour de machine à laver selon les revendications 1 à 7, **caractérisé en ce que** le dit assemblage de stators (12) est revêtu d'une matière plastique, celle-ci formant une isolation frontale (14), une isolation de rainure (15) et un moyeu (16) pour fixer le stator (1) au support en forme de croix du tambour.

9. Moteur commuté électroniquement pour entraîner directement un tambour de machine à laver selon les revendications 1 à 8, **caractérisé en ce que** des places de fixation pour trois circuits (17) de générateurs à effet Hall se trouvant au centre entre les rainures adjacentes (10) à une distance angulaire de 15° l'un par rapport à l'autre, sont prévues dans le revêtement de matière plastique de l'assemblage de stators.

10. Moteur commuté électroniquement pour entraîner directement un tambour de machine à laver selon les revendications 1 à 9, **caractérisé en ce que** lesdits segments magnétiques (3) conjointement avec le noyau de fer (7) sont revêtus de matière plastique (18) qui forment en même temps un moyeu pour fixer le rotor (2) à l'axe du tambour de la machine à laver.

11. Moteur commuté électroniquement pour entraîner directement un tambour de machine à laver selon les revendications 1 à 10, **caractérisé en ce que** les segments magnétiques (20) sont magnétisés en vue de former un delta, tandis que les pôles du stator sont droits.

12. Moteur commuté électroniquement pour entraîner directement un tambour de machine à laver selon les revendications 1 à 10, **caractérisé en ce que** les pôles du stator (21) sont façonnés en une forme trapézoïdale double, tandis que les segments magnétiques sont magnétisés en ligne droite.
